# EUROPÄISCHE PATENTSCHRIFT

(11) **EP 2 212 220 B1**
(45) Veröffentlichungstag und Bekanntmachung des Hinweises auf die Patenterteilung: **18.05.2011**
(21) Anmeldenummer: 08803322.0
(22) Anmeldetag: 28.08.2008
(51) Int. Cl.: B65G 13/02, B65G 17/00, B65G 47/26

(54) **FRIKTIONSFÖRDERSYSTEM SOWIE WERKSTÜCKTRÄGER FÜR FRIKTIONSFÖRDERSYSTEM**
FRICTION CONVEYOR SYSTEM AND WORKPIECE CARRIER FOR FRICTION CONVEYOR SYSTEM
SYSTÈME D'ACHEMINEMENT PAR FRICTION ET PORTE-PIÈCES POUR SYSTÈME D'ACHEMINEMENT PAR FRICTION

(30) Priorität: 30.08.2007 DE 102007040908
(43) Veröffentlichungstag der Anmeldung: 04.08.2010
(73) Patentinhaber: Ceratis GmbH, 56307 Dernbach (DE)
(72) Erfinder: KRUPS, Matthias, 53639 Königswinter (DE); KRUPS, Peter, 56584 Anhausen (DE)
(74) Vertreter: von Kreisler Selting Werner
(86) Internationale Anmeldenummer: PCT/EP2008/061297
(87) Internationale Veröffentlichungsnummer: WO 2009/027461

(56) Entgegenhaltungen:
- DE-A1- 19 539 844
- DE-A1- 19 822 554
- US-A- 5 222 587

## Beschreibung

Die Erfindung betrifft ein Friktionsfördersystem, das eine Fördereinrichtung, wie einen Rollenförderer aufweist, auf den Werkstückträger lose aufgelegt werden. Ferner betrifft die Erfindung einen Werkstückträger gemäß dem Oberbegriff des Anspruchs 2 für ein derartiges Friktionsfördersystem.

Mit Hilfe von Fördereinrichtungen werden insbesondere in der Serienfertigung Werkstücke zwischen einzelnen Arbeitsplätzen, an denen beispielsweise eine Montage oder Bearbeitung der Werkstücke erfolgt, transportiert. Hierzu werden die Werkstücke auf Werkstückträgern angeordnet und die Werkstückträgereinrichtungen zusammen mit den Werkstücken durch entsprechende Fördereinrichtungen bewegt. Zum Bewegen der Werkstückträger sind Friktionsförderer bekannt. Bei Friktionsförderern werden die Werkstückträger nicht fest mit Fördereinrichtungen verbunden, sondern liegen beispielsweise auf Rollen lose auf. Die Bewegung der Werkstückträger erfolgt durch auftretende Reibungskräfte zwischen den Rollen, Gurten oder Platten und Reibflächen der Werkstückträger. Friktionsförderer haben insbesondere den Vorteil, dass ein Stauen der Werkstückträger möglich ist. Hierbei erfolgt während des Stauvorgangs ein Durchrutschen der entsprechenden Antriebseinrichtungen der Friktionsförderer. Ein aufwändiges und kompliziertes Ausklinken aus einer Fördereinrichtung, wie einer Kette, ist bei Friktionsförderern nicht erforderlich.

Ferner haben Friktionsförderer den Vorteil, dass Kurven und insbesondere Abzweigungen auf einfache Weise realisiert werden können. Mit Hilfe von Abzweigungseinrichtungen, wie Weichen, können einzelne Werkstückträger beispielsweise aus- oder eingeschleust werden. Hierdurch weisen Friktionsförderer eine hohe Flexibilität auf. Ein derartiger Friktionsförderer ist in DE 40 36 214 beschrieben.

Da die Werkstückträger bei Friktionsförderern durch einen Stauvorgang an den einzelnen Arbeitsplätzen angehalten werden müssen, müssen die angetriebenen Rollen bzw. Förderelemente mit Rutschkupplungen versehen sein. Derartige Rutschkupplungen sind teuer und wartungsintensiv. Ferner ist es erforderlich, Rutschkupplungen zu justieren bzw. einzustellen, um festzulegen, ab welchem Drehmoment die Rutschkupplung durchrutscht. Aufgrund von Verschleiß muss die Einstellung in regelmäßigen Abständen überprüft werden.

Aus DE 195 39 844 C2 ist ein Friktionsfördersystem bekannt, bei dem zur Beschleunigung von Werkstückträgern einzelne angetriebene Förderelemente, wie Rollen, scheibenförmige Übertragungselemente aufweisen. Die scheibenförmigen Übertragungselemente, die eine Verzahnung aufweisen können, greifen in einen in Längsrichtung des Werkstückträgers verlaufenden Schlitz ein, wobei der Schlitz beispielsweise eine Zahnstange aufweist. Durch derartige zusätzliche Übertragungselemente kann der Werkstückträger beschleunigt werden.

Ferner ist aus U.S. 5,222,587 ein Friktionsfördersystem bekannt, bei dem der Werkstückträger über Rollelemente auf Bahnen angeordnet ist. Zum Bewegen der Werkstückträger ist ferner ein Band vorgesehen, das in vertikaler Richtung zwischen der Unterseite der Werkstückträger und den Auflagebändern für die Rollen angeordnet ist. Innerhalb des Werkstückträgers ist ein bewegbares Element angeordnet, das mit dem Band in Eingriff steht, um den Werkstückträger zu bewegen. Über eine Stange kann das Element bewegt werden, um die Reibung zwischen dem Element und dem Förderband zu verringern. Das Dokument U.S. 5,222,587 offenbart ein Werkstückträger für Friktionsförderer gemäß dem Oberbegriff des Anspruchs 2.

Aufgabe der Erfindung ist es, ein Friktionsfördersystem zu schaffen, bei dem das Anhalten bzw. Stauen von Werkstückträgern vereinfacht ist. Ferner ist es Aufgabe der Erfindung, einen entsprechenden Werkstückträger für Friktionsfördersysteme zu schaffen.

Die Lösung der Aufgabe erfolgt erfindungsgemäß für ein Friktionsfördersystem gemäß Anspruch 1 und für einen Werkstückträger gemäß Anspruch 2.

Das erfindungsgemäße Friktionsfördersystem weist eine Fördereinrichtung mit mehreren, insbesondere quer zur Fördereinrichtung angeordneten Förderelementen auf.

Die Förderelemente sind auf geraden Förderstrecken üblicherweise quer zur Förderrichtung angeordnet, wobei im Bereich von Kurven oder Abzweigungen ggf. schräg angeordnete Förderelemente vorgesehen sein können. Die Förderelemente, bei denen es sich üblicherweise um Rollen handelt, erstrecken sich beispielsweise über die gesamte Breite der Fördereinrichtung. Ebenso können einzelne Förderelemente bzw. Rollen nur im Randbereich der Fördereinrichtung vorgesehen sein, so dass das auf dem Werkstückträger befindliche Werkstück auch von unten zugänglich ist. Die Förderelemente sind teilweise angetrieben und teilweise frei drehbar gelagert. Hierbei ist der Abstand der angetriebenen Förderelemente üblicherweise geringer als die Länge des Werkstückträgers, so dass stets mindestens ein angetriebenes Förderelement mit dem Werkstückträger zur Förderung in Kontakt steht. Die Werkstückträger liegen bei dem erfindungsgemäßen Friktionsfördersystem lose auf den Förderelementen der Fördereinrichtung auf. Eine mechanische Kopplung zwischen den Werkstückträgern und der Fördereinrichtung erfolgt nicht.

Mit den angetriebenen Förderelementen sind Übertragungselemente verbunden, die zum Fördern der Werkstückträger mit an dem Werkstückträger vorgesehenen Friktionsbereichen zusammenwirken. Bei den Übertragungselementen kann es sich um Bereiche der Förderelemente handeln, die eine höhere Friktion, d.h. eine anders ausgebildete Oberfläche aufweisen. Vorzugsweise handelt es sich bei den Übertragungselementen um durchlaufende Riemen und/ oder scheibenförmige Elemente, die einen runden Querschnitt haben und deren Durchmesser größer als der Durchmesser einer Rolle ist. Allgemein ausgedrückt steht in bevorzugter Ausführungsform das Übertragungselement gegenüber einer Außenseite des Förderelements vor. Das Übertragungselement wirkt mit dem am Werkstückträger vorgesehenen Friktionsbereich zusammen, wobei es sich bei dem Friktionsbereich ebenfalls um einen Bereich mit höherer Friktion handeln kann. Dies kann durch Verwendung geeigneter Materialien oder durch Veränderung der Oberflächenrauheit in dem Friktionsbereich erzielt werden.

Erfindungsgemäß ist der Friktionsbereich an einem mit dem Werkstückträger verbundenen Friktionselement angeordnet. Das Friktionselement ist erfindungsgemäß beweglich mit dem Werkstückträger verbunden. Das Friktionselement ist ferner mit einem Betätigungselement verbunden. Mit Hilfe des Betätigungselements ist ein Bewegen des Friktionselements möglich. Durch die Bewegung des Friktionselements kann ein Abstand zwischen dem Übertragungselement und dem Friktionselement hergestellt werden und/ oder die Reibung zwischen diesen beiden Elementen durch Verringerung des Anlagedrucks reduziert werden. Mit Hilfe des Betätigungselements erfolgt somit ein Bewegen des Friktionselements, so dass sich der Abstand zwischen Friktionselement und Übertragungselement vergrößert, vorzugsweise sich zwischen diesen beiden Elementen ein Schlitz ausbildet. Durch Betätigen des Friktionselements erfolgt somit ein Außer-Eingriff-Bringen des Übertragungselements und des Friktionselements, wobei erfindungsgemäß unter Außer-Eingriff-Bringen auch ein Verringern der Reibung zwischen diesen beiden Elementen verstanden wird.

Erfindungsgemäß weisen die angetriebenen, mit den Übertragungselementen verbundenen Förderelemente einen geringeren Durchmesser als die nicht angetriebenen Förderelemente auf.

Erfindungsgemäß kann das Betätigungselement durch ein Stoppelement im Bereich einer Arbeitsstation oder durch Stauen der Werkstückträger aktiviert werden. Ein Anhalten des Werkstückträgers führt somit stets dazu, dass das Übertragungselement und das Friktionselement außer Eingriff gebracht werden. Dies hat den erfindungsgemäßen Vorteil, dass Förderelemente ohne Rutschkupplungen vorgesehen werden können, da die angetriebenen Förderelemente frei drehen können, sobald das Friktionselement und das Übertragungselement außer Eingriff gebracht sind. Zumindest können erheblich einfacher aufgebaute Rutschkupplungen vorgesehen werden, die sodann im Wesentlichen als zusätzliches Sicherheitselement dienen.

Das erfindungsgemäße Friktionsfördersystem ist insbesondere für den Transport von Werkstücken mit einem Gewicht von weniger als 250 kg geeignet. Bei derartigen Friktionsfördersystemen liegt vorzugsweise der Werkstückträger unmittelbar auf den Förderelementen ohne Vorsehen zusätzlicher Abstützelemente, wie an dem Werkstückträger vorgesehene Abstützrollen, auf.

Eine weitere unabhängige Erfindung besteht in einem Werkstückträger für Friktionsfördersysteme, insbesondere die vorstehend beschriebenen erfindungsgemäßen Friktionsfördersysteme. Der Werkstückträger weist einen Grundkörper zur Aufnahme von Werkstücken auf. Auf den Grundkörper wird das Werkstück beispielsweise aufgelegt oder durch Halterungen, wie Spannbacken und dergleichen, fixiert. Der Werkstückträger weist einen Friktionsbereich auf, der üblicherweise an der Unterseite des Grundkörpers vorgesehen ist und bei aufgelegtem Werkstückträger in Richtung des Friktionsförderers weist. Über den Friktionsbereich werden die zum Bewegen des Werkstückträgers erforderlichen Förderkräfte aufgenommen. Erfindungsgemäß ist der Friktionsbereich an einem beweglichen, mit dem Grundkörper verbundenen Friktionselement angeordnet. Das Friktionselement ist mit einem Betätigungselement verbunden. Wie vorstehend anhand des Friktionsfördersystems beschrieben, erfolgt durch Aktivieren des Betätigungselements ein Bewegen des Friktionselements, so dass das Friktionselement in eine Außer-Eingriff-Position bewegt wird. Hierdurch erfolgt ein Verringern der Reibung zwischen dem Friktionsbereich des Werkstückträgers und Friktions- oder Übertragungselementen der Fördereinrichtung, so dass bei erheblich verringerter Reibung der Werkstückträger, beispielsweise an Arbeitsstationen, auf einfache Weise gestoppt werden kann. Vorzugsweise erfolgt ein derartiges Bewegen des Friktionselements, dass im Friktionsbereich des Grundkörpers des Werkstückträgers keine Reibung mehr auftritt, sondern der Friktionsbereich einen Abstand zu dem entsprechenden Friktions- bzw. Übertragungselement der Fördereinrichtung aufweist. Dies hat den vorstehend anhand des Friktionsfördersystems beschriebenen Vorteil, dass angetriebene Förderelemente ohne Rutschkupplung oder mit einer deutlich günstigeren Rutschkupplung verwendet werden können. Das Friktionselement ist erfindungsgemäß stabförmig ausgebildet.

Im Folgenden werden bevorzugte Weiterbildungen des Werkstückträgers beschrieben, wobei die bevorzugten Ausführungsformen des Werkstückträgers auch bevorzugte Weiterbildungen des Friktionsfördersystems darstellen.

Vorzugsweise sind die Friktionselemente in einer Ausnehmung des Werkstückträgers bzw. des Grundkörpers des Werkstückträgers angeordnet. Die Ausnehmung ist insbesondere schlitzförmig ausgebildet. In bevorzugter Ausführungsform sind je Werkstückträger mindestens zwei, insbesondere schlitzförmige Ausnehmungen vorgesehen. Die Ausnehmungen erstrecken sich vorzugsweise über die gesamte Länge des Werkstückträgers in dessen Längsrichtung bzw. in Förderrichtung. Die beiden Ausnehmungen sind vorzugsweise parallel zueinander angeordnet. Jede Ausnehmung ist vorzugsweise an den Enden offen, so dass ein beispielsweise scheibenförmiges Übertragungselement einfach in die Ausnehmung eingeführt werden kann.

Das Friktionselement, das vorzugsweise innerhalb der Ausnehmung angeordnet ist, ist in bevorzugter Ausführungsform stabförmig ausgebildet. Insbesondere handelt es sich hierbei um einen Stab mit rechteckigem Querschnitt, wobei die in Richtung des Übertragungselements der Förderelemente weisende Seite eine erhöhte Rauhigkeit aufweisen kann. Das Friktionselement erstreckt sich vorzugsweise im Wesentlichen über die gesamte Länge des Werkstückträgers. Zumindest erstreckt sich das Friktionselement über dreiviertel der Länge des Werkstückträgers. Hierdurch kann der Abstand der angetriebenen Förderelemente entsprechend vergrößert werden.

Bei dem Betätigungselement kann es sich um ein beispielsweise elektrisch und/ oder magnetisch angetriebenes Betätigungselement handeln. Beispielsweise kann das Betätigungselement einen Sensor aufweisen, durch den ein Stauzustand detektiert wird. Sobald der Stauzustand detektiert ist, erfolgt sodann mit Hilfe des Betätigungselements ein Bewegen des Friktionselements.

In besonders bevorzugter Ausführungsform der Erfindung ist das Betätigungselement mechanisch ausgebildet. Insbesondere ist das Betätigungselement fest mit dem mindestens einen Friktionselement, insbesondere den beiden je Werkstückträger vorgesehenen Friktionselementen verbunden. Hierbei kann das Betätigungselement beispielsweise entsprechend einer Stoßstange über das vordere Ende des Werkstückträgers hinausragen. Beim Anfahren eines Werkstückträgers gegen einen Stopper oder beim Auffahren eines Werkstückträgers auf einen vor dem Werkstückträger befindlichen anderen Werkstückträger oder auf ein Hindernis erfolgt somit ein Verschieben des Betätigungselements in Richtung des Werkstückträgers. Aufgrund der vorzugsweise festen mechanischen Verbindung des Betätigungselements mit dem mindestens einen Friktionselement wird durch die hervorgerufene Bewegung des Betätigungselements automatisch auch eine Bewegung des mindestens einen Friktionselements, vorzugsweise beider Friktionselemente hervorgerufen. Durch diese Bewegung gelangt das Friktionselement in die Außer-Eingriff-Position, so dass die Reibung zwischen dem an dem Friktionselement vorgesehenen Friktionsbereich und dem Übertragungselement zumindest verringert wird, vorzugsweise die beiden Elemente in einem Abstand zueinander gebracht werden.

Um ein definiertes Bewegen des Friktionselements zu gewährleisten ist ein Bewegungselement vorgesehen. Bei dem Bewegungselement kann es sich um Führungsnuten und/ oder Führungsansätze handeln, die an dem Friktionselement und/ oder dem Werkstückträger bzw. dem Grundkörper vorgesehen sind, um eine definierte Lage und Bewegung des Friktionselements in die Außer-Eingriff-Position bei der Aktivierung des Betätigungselements zu gewährleisten.

In besonders bevorzugter Ausführungsform weist das Bewegungselement einen stiftförmig ausgebildeten, mit dem Werkstückträger bzw. dem Grundkörper fest verbundenen Ansatz auf. Der Ansatz greift in eine am Friktionselement vorgesehene Öffnung oder Nut. Selbstverständlich kann der Ansatz auch am Friktionselement vorgesehen sein und in eine am Werkstückträger vorgesehene Öffnung eingreifen.

Der Ansatz und/ oder die Öffnung des Bewegungselements sind derart ausgebildet, dass ein Bewegen des Friktionselements in Längsrichtung des Werkstückträgers, das insbesondere durch das Betätigungselement hervorgerufen ist, zwangsweise ein Bewegen in die Außer-Eingriff-Position, d.h. eine Position mit geringerer oder keiner Reibung zwischen dem Übertragungselement und dem Friktionselement, führt. Insbesondere erfolgt durch das Bewegungselement beim Bewegen des Friktionselements in Längsrichtung bzw. Transportrichtung ein Bewegen des Friktionselements senkrecht zur Längsrichtung von der Fördereinrichtung weg. Hierdurch gelangt das Friktionselement mit dem Übertragungselement außer Eingriff.

Bei der in dem Friktionselement oder dem Werkstückträger vorgesehen Öffnung handelt es sich vorzugsweise um ein Langloch, in dem ein kreisrunder Zapfen bzw. Ansatz angeordnet ist. Vorzugsweise weist das Langloch einen Winkel * 0° zur Längsrichtung des Werkstückträgers auf. In Förderrichtung ist das Langloch vorzugsweise fallend ausgebildet. Dies hat den Vorteil, dass das Übertragungselement nach dem Eingriff in das Friktionselement eine Bewegung des Friktionselements hemmt, sobald der Werkstückträger wieder freigegeben wird und sich das Friktionselement nach unten in Richtung des Übertragungselements bewegt.

Die Bewegung des Friktionselements aus der Außer-Eingriff-Position in die Eingriff-Position kann durch ein Federelement oder dergleichen erfolgen. Vorzugsweise ist es ausreichend, dass die Überführung des Friktionselements in die Eingriff-Position aufgrund der Gewichtskraft des Friktionselements selbst erfolgt.

Bei einer besonders bevorzugten Weiterbildung des Friktionsfördersystems ist das Übertragungselement scheibenförmig, insbesondere entsprechend eines Spurkranzes, ausgebildet. Das Übertragungselement ragt in schlitzförmige Ausnehmungen des Werkstückträgers. Hierdurch ist zusätzlich eine seitliche Führung gewährleistet.

Bei dem erfindungsgemäßen Friktionsfördersystem dienen die angetriebenen Förderelemente im Wesentlichen zum Antreiben bzw. Fördern der Werkstückträger. Eine Aufnahme des Gewichts des Werkstückträgers und des Werkstücks erfolgt im Wesentlichen durch die nicht angetriebenen Förderelemente. Vorzugsweise stehen somit die angetriebenen Förderelemente ausschließlich über die Übertragungselemente mit dem Werkstückträger in Kontakt. Dies kann beispielsweise dadurch erzielt werden, dass der Durchmesser der angetriebenen Förderelemente aus einem Bereich der scheibenförmigen Übertragungselemente geringer ist als der Durchmesser der nicht angetriebenen Förderelemente, wenn es sich bei den Förderelementen um Rollen handelt. Dies führt dazu, dass die Unterseite des Werkstückträgers ausschließlich auf den nicht angetriebenen Förderelementen aufliegt.

Die angetriebenen Förderelemente, bei denen es sich erfindungsgemäß um Rollen handelt, sind vorzugsweise durch einen Elektromotor angetrieben. Hierbei kann erfindungsgemäß das Vorsehen einer Rutschkupplung entfallen.

Nachfolgend wird die Erfindung anhand einer bevorzugten Ausführungsform unter Bezugnahme auf die anliegenden Zeichnungen näher erläutert.

Es zeigen:

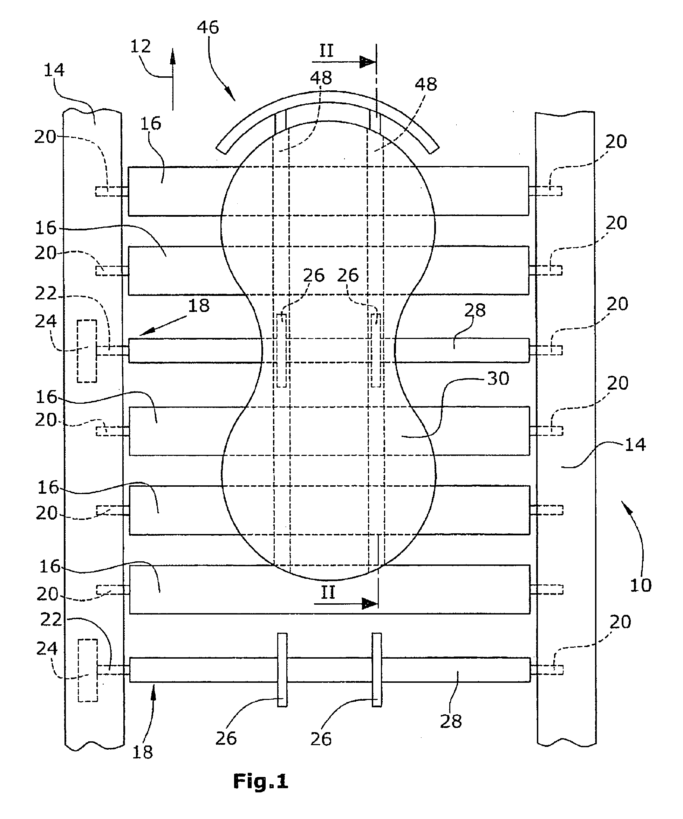

- Fig. 1: eine schematische Draufsicht eines Friktionsfördersystems mit Werkstückträger,
- Fig. 2: eine schematische Schnittansicht entlang der Linie II-II in Fig. 1, wobei die Übertragungselemente mit den Friktionselementen in Eingriff stehen, und
- Fig. 3: eine der Fig. 2 entsprechende, schematische Ansicht, wobei jedoch die Friktionselemente hinsichtlich der Übertragungselemente sich in der Außer-Eingriff-Position befinden.

Das Friktionsfördersystem weist eine Fördereinrichtung 10 auf. Die Fördereinrichtung 10 weist in Längs- bzw. Förderrichtung 12 verlaufende Rahmen 14 auf. Zusätzlich kann das Fördersystem nicht dargestellte Weichen und Kurven aufweisen. Die Rahmen 14 tragen als Rollen ausgebildete Förderelemente 16, 18. Die Förderelemente 16 sind über Achsen 20 und entsprechende Lager frei drehbar in den Rahmen 14 gelagert. Bei den Förderelementen 18 handelt es sich um angetriebene Förderelemente. Im dargestellten Ausführungsbeispiel erstrecken sich auch die angetriebenen Förderelemente über die gesamte Breite der Fördereinrichtung 10, so dass eine Seite der angetriebenen Förderelemente 18 über eine Welle 20 frei drehbar in dem Rahmen 14 gelagert ist. Die zweite Welle 22 der angetriebenen Fördereinrichtung 18 ist angetrieben und mit einem Elektromotor 24 verbunden.

Im dargestellten Ausführungsbeispiel erstrecken sich die nicht angetriebenen Förderelemente 16 sowie die angetriebenen Förderelemente 18 über die gesamte Breite der Fördereinrichtung 10. Ebenso können einzelne Förderelemente mit den beiden einander gegenüberliegenden Rahmen 14 verbunden sein, so dass zwischen den Förderelementen ein Freiraum entsteht. Hierdurch sind die Werkstücke auch von unten zugänglich.

Die angetriebenen Förderelemente weisen im dargestellten Ausführungsbeispiel zwei scheibenförmige Übertragungselemente 26 auf. Die beiden scheibenförmigen Übertragungselemente 26 sind in einem Abstand zueinander angeordnet und im dargestellten Ausführungsbeispiel von einer zylindrischen Rolle 28 getragen. Die zylindrische Rolle 28 weist einen geringeren Außendurchmesser als die ebenfalls zylindrisch ausgebildete nicht angetriebenen Rollen 16 auf.

Ein Werkstückträger 30 liegt auf der Oberseite der Fördereinrichtung 10 auf und wird mit Hilfe der angetriebenen Förderelemente 18 in Richtung des Pfeils 12 bewegt.

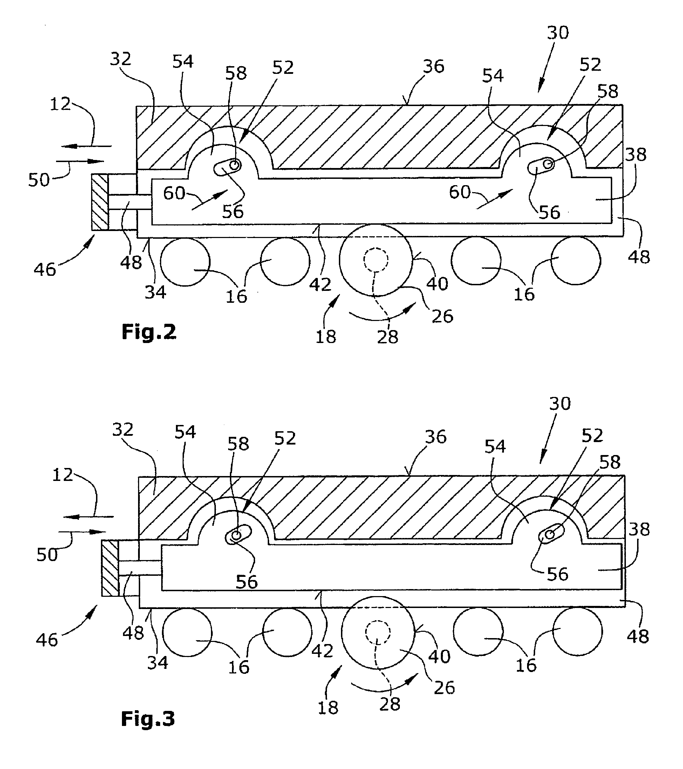

Der Werkstückträger 30 weist einen Grundkörper 32 auf. Dessen Unterseite 34 (Fig. 2) liegt auf den nicht angetriebenen, frei drehbaren Rollen 16 auf. Die Rollen 16 dienen somit im Wesentlichen zur Aufnahme des auf einer Oberseite 36 des Werkstückträgers 30 angeordneten Werkstücks.

Zum Bewegen des Werkstückträgers 30 in Förderrichtung 12 liegen während des Bewegens (Fig. 2) Friktionselemente 38 an den Übertragungselementen 26 an. Hierzu weisen die scheibenförmigen Übertragungselemente 26 eine zylindermantelförmige Oberfläche 40 auf, die an einem insbesondere ebenen Friktionsbereich 42 des Friktionselements 38 anliegt. Hierbei weist das Friktionselement vorzugsweise einen rechteckigen Querschnitt auf, so dass der Friktionsbereich 42 eine ebene, sich über die gesamte Länge des Friktionselements 38 erstreckende Fläche darstellt. Durch Drehen der angetriebenen Förderelemente 18 in Richtung eines Pfeils 4 erfolgt somit ein Transport des Werkstückträgers 30 in Richtung des Pfeils 12 (Fig. 2).

Um den Werkstückträger beispielsweise an einer Bearbeitungsposition oder beim Stauen mehrerer Werkstückträger anzuhalten, sind die im dargestellten Ausführungsbeispiel 2 sich über die gesamte Länge des Werkstückträgers 30 erstreckenden Friktionselemente 38 mit einem Betätigungselement 46 verbunden. Das Betätigungselement 46, das entsprechend einer Stoßstange ausgebildet ist, ist über insbesondere stabförmige Verbindungselemente 48 starr mit den beiden Friktionselementen 38 verbunden.

Die jeweils in einer schlitzförmigen Ausnehmung 48 des Werkstückträgers 30 angeordneten Friktionselemente 38 werden somit zwangsweise in dem Schlitz 48 bewegt, wenn das Betätigungselement in Richtung eines Pfeils 50 gedrückt wird. Dies erfolgt durch Anfahren gegen ein Stoppelement oder durch Auffahren auf einen in Förderrichtung vor dem Werkstückträger 30 angeordneten weiteren Werkstückträger. Aufgrund der mechanischen Verbindung zwischen dem Betätigungselement 46 und den beiden Friktionselementen 38 ist kein Sensor oder elektrischer Antrieb zum Verschieben der Friktionselemente in die Außer-Eingriff-Position erforderlich. Vielmehr erfolgt durch Verschieben des Betätigungselements 46 in Richtung des Pfeils 50 ebenfalls ein Verschieben der Friktionselemente 38.

Um ein Verschieben der Friktionselemente 38 in die Außer-Eingriff-Position zu gewährleisten, sind ferner zwei Bewegungselemente 52 vorgesehen, die im dargestellten Ausführungsbeispiel fest mit den Friktionselementen 38 verbunden sind. Hierbei sind je Friktionselement 38 zwei Bewegungselemente 52 vorgesehen. Bei den Bewegungselementen 52 handelt es sich im dargestellten Ausführungsbeispiel um mit dem stabförmigen Friktionselement verbundene laschenförmige Ansätze 54, die jeweils ein Langloch 56 aufweisen. Das Langloch 56 verläuft in einem Winkel bzw. schräg zur Förderrichtung 12, wobei das Langloch in Förderrichtung 12 fallend ausgebildet ist. In den beiden als Langlöchern ausgebildeten Öffnungen 56 ist jeweils ein im dargestellten Ausführungsbeispiel als zylindrischer Stift ausgebildeter Ansatz 58 angeordnet. Der Stift 58 ist fest mit dem Grundkörper 32 des Werkstückträgers 30 verbunden.

Durch Bewegen des Betätigungselements 46 in Richtung des Pfeils 50 erfolgt somit ein Bewegen der Friktionselemente 38 in Richtung der Pfeile 60, d.h. parallel zur Ausrichtung der Langlöcher 56. Hierdurch werden die Friktionselemente 38 bzgl. der Übertragungselemente 26 in die Außer-Eingriff-Position gebracht.

## Patentansprüche

1. Friktionsfördersystem mit
einer Fördereinrichtung (10) mit mehreren, insbesondere quer zur Förderrichtung (12) angeordneten als Rollen ausgebildeten Förderelementen (16, 18), die teilweise angetrieben und teilweise frei drehbar sind,
auf der Fördereinrichtung (10) lose auflegbaren Werkstückträgern (30) und mit den angetriebenen Förderelementen (18) verbundenen Übertragungselementen (26), die zum Fördern der Werkstückträger (30) mit an dem Werkstückträger (30) vorgesehenen Friktionsbereichen (42) zusammenwirken,
wobei die angetriebenen Förderelemente (18) einen geringeren Durchmesser als die nicht angetriebenen Förderelemente (16) aufweisen, und
wobei die Friktionsbereiche (42) an einem beweglich mit dem Werkstückträger (30) verbundenen Friktionselement (38) angeordnet sind, wobei das Friktionselement (38) mit einem Betätigungselement (46) verbunden ist, durch das der Friktionsbereich (42) des Friktionselements (38) mit dem Übertragungselement (26) der angetriebenen Förderelemente (18) außer Eingriff bringbar ist.

2. Werkstückträger für Friktionsförderer, mit
einem Grundkörper (32) zur Aufnahme von Werkstücken, und
einem Friktionsbereich (42) zur Aufnahme von Förderkräften,
wobei der Friktionsbereich (42) an einem beweglich mit dem Grundkörper (32) verbundenen Friktionselement (38) angeordnet ist, das mit einem Betätigungselement (46) zum Bewegen des Friktionselements (38) in eine Außer-Eingriff-Position verbunden ist,
**dadurch gekennzeichnet, dass**
das Friktionselement (38) stabförmig ist.

3. Werkstückträger nach Anspruch 2, **dadurch gekennzeichnet, dass** das Friktionselement (38) in einer insbesondere schlitzförmigen Ausnehmung (48) des Werkstückträgers angeordnet ist.

4. Werkstückträger nach Anspruch 2 oder 3, **dadurch gekennzeichnet, dass** mindestens zwei, zueinander parallel angeordnete Friktionselemente (38) vorgesehen sind, die sich vorzugsweise in Längsrichtung (12) des Werkstückträgers erstrecken.

5. Werkstückträger nach einem der Ansprüche 2 bis 4, **dadurch gekennzeichnet, dass** sich das Friktionselement (38) im Wesentlichen über die gesamte Länge des Werkstückträgers (30) erstreckt.

6. Werkstückträger nach einem der Ansprüche 2 bis 5, **dadurch gekennzeichnet, dass** das Betätigungselement (46) als mechanisches Betätigungselement ausgebildet ist, insbesondere fest mit dem mindestens einen Friktionselement (38) verbunden ist.

7. Werkstückträger nach Anspruch 6, **dadurch gekennzeichnet, dass** die mindestens zwei Friktionselemente (38) über ein gemeinsames Betätigungselement (46) betätigbar sind.

8. Werkstückträger nach einem der Ansprüche 2 bis 7, **gekennzeichnet durch** ein Bewegungselement (52) zum Bewegen des Friktionselements (38) in die Außer-Eingriff-Position.

9. Werkstückträger nach Anspruch 8, **dadurch gekennzeichnet, dass** das Bewegungselement (52) einen stiftförmig ausgebildeten, mit dem Grundkörper (32) oder dem Friktionselement (38) fest verbundenen Ansatz (58) aufweist, der in eine im Friktionselement (38) oder dem Grundkörper (32) vorgesehene Öffnung (56) eingreift.

10. Werkstückträger nach Anspruch 9, **dadurch gekennzeichnet, dass** der Ansatz (58) und/ oder die Öffnung (56) derart ausgebildet ist, dass ein Bewegen des Friktionselements (38) in Längsrichtung (12) des Werkstückträgers (30) zwangsweise eine Bewegung in die Außer-Eingriff-Position, insbesondere senkrecht zur Längsrichtung (12) des Werkstückträgers von der Fördereinrichtung (10) weg bewirkt.

11. Werkstückträger nach Anspruch 9 oder 10, **dadurch gekennzeichnet, dass** die Öffnung als Langloch (56) ausgebildet ist, das in einem Winkel zur Längsrichtung (12) des Werkstückträgers (30) insbesondere in Förderrichtung (12) fallend ausgebildet ist.

12. Friktionsfördersystem nach Anspruch 1, **dadurch gekennzeichnet, dass** das mindestens eine Übertragungselement (26) scheibenförmig ausgebildet ist und in eine insbesondere schlitzförmige Ausnehmung (48) des Werkstückträgers (30) ragt.

13. Friktionsfördersystem nach Anspruch 1 oder 12, **dadurch gekennzeichnet, dass** die angetriebenen Förderelemente (18) im Wesentlichen ausschließlich zum Bewegen des Werkstückträgers (30), nicht jedoch zur Kraftaufnahme dienen und/ oder dass die angetriebenen Förderelemente (18) mit dem Werkstückträger (30) ausschließlich über die Übertragungselemente (26) in Kontakt stehen.

14. Friktionsfördersystem nach Anspruch 1, 12 oder 13, **dadurch gekennzeichnet, dass** die angetriebenen Förderelemente (18) mit einem Antrieb (24) zum Dauerbetrieb ohne Vorsehen einer Rutschkupplung verbunden sind.

15. Friktionsfördersystem nach Anspruch 1 oder einem der Ansprüche 12 bis 14, **gekennzeichnet durch** einen Werkstückträger nach einem der Ansprüche 3 bis 11.

## Claims

1. A friction conveyor system comprising
a conveyor means (10) including a plurality of conveyor elements (16,18) configured as rollers and arranged preferably transverse to the conveying direction (12), the conveyor elements (16,18) being partly driven and partly arranged for free rotation,
workpiece carriers (30) adapted to be loosely placed on the conveyor means (10), and transmission elements (26) connected to the driven conveyor elements (18) and cooperating with friction regions (42) provided on the workpiece carrier (30) so as to convey the workpiece carriers (30),
wherein the driven conveyor elements (18) have a smaller diameter than the non-driven conveyor elements (16), and
the friction regions (42) are arranged on a friction element (38) which is movably connected to the workpiece carrier (30), the friction element (38) being connected to an actuation element (46) adapted to cause the friction region (42) of the friction element (38) to become disengaged from the transmission element (26) of the driven conveyor elements (18).

2. A workpiece carrier for friction conveyors, comprising
a base body (32) for taking up workpieces, and
a friction region (42) provided to receive conveying forces,
wherein the friction region (42) is arranged on a friction element (38) which is movably connected to the base body (32), the friction element (38) being connected to an actuation element (46) adapted to move the friction element (38) into a disengaged position,
**characterized in that**
the friction element (38) is rod-shaped.

3. The workpiece carrier according to claim 2, wherein the friction element (38) is arranged in a preferably slot-shaped recess (48) of the workpiece carrier (30).

4. The workpiece carrier according to claim 2 or 3, wherein at least two mutually parallel friction elements (38) are provided, preferably extending in the longitudinal direction (12) of the workpiece carrier.

5. The workpiece carrier according to one of claims 2 to 4, wherein the friction element (38) extends substantially along the complete length of the workpiece carrier (30).

6. The workpiece carrier according to one of claims 2 to 5, wherein the actuation element (46) is formed as a mechanical actuation element and preferably is tightly connected to the at least one friction element (38).

7. The workpiece carrier according to claim 6, wherein the at least two friction elements (38) are adapted to be actuated via a common actuation element (46).

8. The workpiece carrier according to one of claims 2 to 7, wherein a moving element (52) is provided to move the friction element (38) into the disengaged position.

9. The workpiece carrier according to claim 8, wherein the moving element (52) comprises a pin-shaped projection (58) rigidly connected to the base body (32) or the friction element (38) and arranged to engage an opening (56) provided in the friction element (38) or the base body (32).

10. The workpiece carrier according to claim 9, wherein the projection (58) and/or the opening (56) are configured in such a manner that a movement of the friction element (38) in the longitudinal direction (12) of the workpiece carrier (30) will cause a compulsory movement into the disengaged position, preferably vertically to the longitudinal direction (12) of the workpiece carrier away from the conveyor means (10).

11. The workpiece carrier according to claim 9 or 10, wherein the opening is provided as a longitudinal hole (56) formed at an angle to the longitudinal direction (12) of the workpiece carrier (30) preferably at a downward slope in the conveying direction (12).

12. The friction conveyor system according to claim 1, wherein the at least one transmission element (26) is disk-shaped and extends into a preferably slot-shaped recess (48) of the workpiece carrier (30).

13. The friction conveyor system according to claim 1 or 12, wherein the driven conveyor elements (18) serve substantially only for moving the workpiece carrier (30) but not for force take-up and/or the driven conveyor elements (18) are in contact with the workpiece carrier (30) exclusively via the transmission elements (26).

14. The friction conveyor system according to claim 1, 12 or 13, wherein the driven conveyor elements (18) are connected to a drive means (24) for permanent operation without provision of a slip clutch.

15. The friction conveyor system according to claim 1 or one of claims 12 to 14, comprising a workpiece carrier according to any one of claims 3 - 11.

## Revendications

1. Système d'acheminement par friction comprenant
un moyen d'acheminement (10) comprenant plusieurs éléments d'acheminement (16, 18) sous forme de rouleaux et disposés de préférence transversalement à la direction d'acheminement (12), lesdits éléments (16, 18) en partie entrainés et en partie libres à tourner,
des porte-pièces (30) aptes à être placés de manière non-fixé sur ledit moyen d'acheminement (10), et des éléments de transmission (26) connectés avec lesdits éléments d'acheminement (18) entrainés, lesdits éléments de transmission coopérant avec des régions de friction (42), prévues à la porte-pièce (30), pour transporter lesdites porte-pièces (30),
lesdits éléments d'acheminement (18) entrainés ayant un diamètre inférieur au diamètre des éléments d'acheminement (16) non entrainés, et
lesdites régions de friction (42) étant disposées sur un élément de friction (38) connecté de manière mobile avec ladite porte-pièce (30), ledit élément de friction (38) étant connecté avec un élément actionneur (46) par lequel ladite région de friction (42) dudit élément de friction (38) peut être dégagée dudit élément de transmission (26) des éléments d'acheminement (18) entrainés.

2. Porte-pièce pour système d'acheminement, comprenant
un corps de base (32) pour recevoir des pièces, et
une région de friction (42) pour absorber des forces de transport,
ladite région de friction (42) étant prévue sur un élément de friction (38) connecté de manière mobile avec ledit corps de base (32), ledit élément étant connecté avec un élément actionneur (46) pour déplacer ledit élément de friction (38) dans une position dégagée,
**caractérisée en ce que**
ledit élément de friction (38) est en forme de bâton.

3. Porte-pièce selon la revendication 2, **caractérisée en ce que** ledit élément de friction (38) est disposé dans un creux (48), de préférence en forme de fente, dans ladite porte-pièce (30).

4. Porte-pièce selon la revendication 2 ou 3, **caractérisée en ce qu'**au moins deux éléments de friction (38), parallèle l'un à l'autre, sont prévus qui s'étendent de préférence dans la direction longitudinale (12) de la porte-pièce.

5. Porte-pièce selon l'une quelconque des revendications 2 à 4, **caractérisée en ce que** ledit élément de friction (38) s'étend sensiblement sur toute la longueur de la porte-pièce (30).

6. Porte-pièce selon l'une quelconque des revendications 2 à 5, **caractérisée en ce que** ledit élément actionneur (46) est réalisé sous forme d'un élément actionneur mécanique, qui est de préférence solidaire dudit au moins un élément de friction (38).

7. Porte-pièce selon la revendication 6, **caractérisée en ce que** les au moins deux éléments de friction (38) sont actionnables par l'intermédiaire d'un élément actionneur (46) commun.

8. Porte-pièce selon l'une quelconque des revendications 2 à 7, **caractérisée par** un élément de déplacement (52) pour déplacer ledit élément de friction (38) dans la position dégagée.

9. Porte-pièce selon la revendication 8, **caractérisée en ce que** ledit élément de déplacement (52) comprend une saillie (58) en forme de goupille et solidaire dudit corps de base (32) ou dudit élément de friction (38), ladite saillie entrant dans une ouverture (56) prévue dans ledit élément de friction (38) ou ledit corps de base (32).

10. Porte-pièce selon la revendication 9, **caractérisée en ce que** ladite saillie (58) et/ou ladite ouverture (56) sont formées de sorte que le déplacement dudit élément de friction (38) dans la direction longitudinale (12) de ladite porte-pièce (30) forcément cause le déplacement dans la position dégagée, notamment un déplacement perpendiculaire à la direction longitudinale (12) de ladite porte-pièce, s'écartant du moyen d'acheminement (10).

11. Porte-pièce selon la revendication 9 ou 10, **caractérisée en ce que** ladite ouverture est un trou oblong (56) incliné vers le bas sous un angle par rapport à la direction longitudinale (12) de la porte-pièce (30), notamment dans la direction d'acheminement (12).

12. Système d'acheminement par friction selon la revendication 1, **caractérisé en ce que** ledit au moins un élément de transmission (26) est en forme de disque et saille dans une ouverture (48), notamment en forme de fente, de ladite porte-pièce (30).

13. Système d'acheminement par friction selon la revendication 1 ou 12, **caractérisé en ce que** lesdits éléments d'acheminement (18) entrainés servent sensiblement à déplacer ladite porte-pièce (30), mais no pas à absorber des forces et/ou que lesdits éléments d'acheminement (18) entrainés son en contact avec ladite porte-pièce (30) exclusivement par l'intermédiaire desdits éléments de transmission (26).

14. Système d'acheminement par friction selon la revendication 1, 12 ou 13, **caractérisé en ce que** lesdits éléments d'acheminement (18) entrainés sont connectés avec un entrainement (24) pour une opération en continu sans prévoir un accouplement à patinage.

15. Système d'acheminement par friction selon la revendication 1 ou l'une quelconque des revendications 12 à 14, **caractérisé par** une porte-pièce selon l'une quelconque des revendications 3 à 11.
